# FASCICULE DE BREVET EUROPEEN

(11) **EP 3 743 840 B1**
(45) Date de publication et mention de la délivrance du brevet: **12.06.2024**
(21) Numéro de dépôt: 19701884.9
(22) Date de dépôt: 04.02.2019
(51) Int. Cl.: H04L 9/40, G06F 21/35, G06F 21/44, H04L 9/32

(54) **DISPOSITIF D'AUTHENTIFICATION SECURISE UTILISANT DES SIGNAUX LUMINEUX ET RADIO**
SICHERE AUTHENTIFIZIERUNGSVORRICHTUNG MIT LICHT- UND FUNKSIGNALEN
SECURE AUTHENTICATION DEVICE USING LIGHT AND RADIO SIGNALS

(30) Priorité: 06.02.2018 FR 1850958
(43) Date de publication de la demande: 02.12.2020
(73) Titulaire: Bystamp, 56000 Vannes (FR)
(72) Inventeur: LE BAIL, Yann, 56000 Vannes (FR); HUE, Vincent, 56000 Vannes (FR); EVEN, Laurent, 56000 Vannes (FR); MAISON, Thierry, 56000 Vannes (FR)
(74) Mandataire: Cabinet Le Guen Maillet
(86) Numéro de dépôt international: PCT/EP2019/052602
(87) Numéro de publication internationale: WO 2019/154749

(56) Documents cités:
- EP-A1- 2 610 717
- EP-A1- 2 824 899
- EP-A1- 2 846 508
- WO-A1-2016/108075

## Description

La présente invention concerne le domaine des dispositifs d'authentification.

La demande de brevet internationale PCT/EP2016/075235 déposée le 20 octobre 2016 divulgue un dispositif d'authentification destiné à être utilisé avec un dispositif électronique comprenant un écran tactile capacitif et un récepteur, le dispositif d'authentification étant caractérisé en ce qu'il comprend une pluralité de picots disposés sur une même face du dispositif d'authentification, au moins deux picots étant constitués d'un matériau conducteur, les autres picots étant constitués d'un matériau isolant, tous les picots étant d'un aspect identique, un moyen pour détecter une pression exercée sur au moins un picot et un moyen pour émettre un signal d'authentification destiné à être reçu par le récepteur lorsqu'une pression est détectée, le signal d'authentification étant un signal sonore. Les documents EP 2 846 508 A1 (GEMALTO SA [FR]) 11 mars 2015 (2015-03-11), EP 2 824 899 A1 (GEMALTO SA [FR]) 14 janvier 2015 (2015-01-14) et EP 2 610 717 A1 (GEMALTO SA [FR]) 3 juillet 2013 (2013-07-03) divulguent en combinaison la sécurisation de la communication entre deux dispositifs, basé sur une détection du contact entre ces deux dispositifs pour que l'un des dispositif chiffre ou signe les informations transmises par le second dispositif.

La communication radiofréquences entre ces deux dispositifs est établie à l'aide du récepteur de lumière, émulateurs de touché et de l'écran des dispositifs respectifs.

Ces documents ne divulguent pas la présence de picots conducteurs ou non formant un motif sur le dispositif d'authentification et permettant le changement d'un mode de fonctionnement de veille a un mode de fonctionnement actif. Au contraire, ils détaillent l'utilisation d'actionneurs permettant d'émuler un contact actif sur une première zone délimitée de l'écran tactile d'un équipement, zone utilisé pour l'envoi de signaux lumineux.

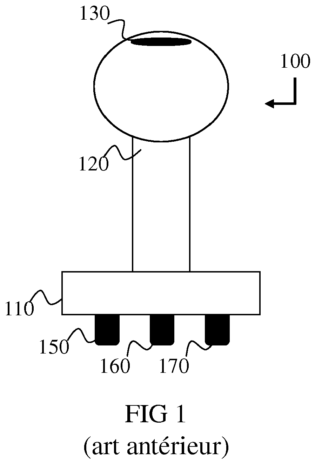

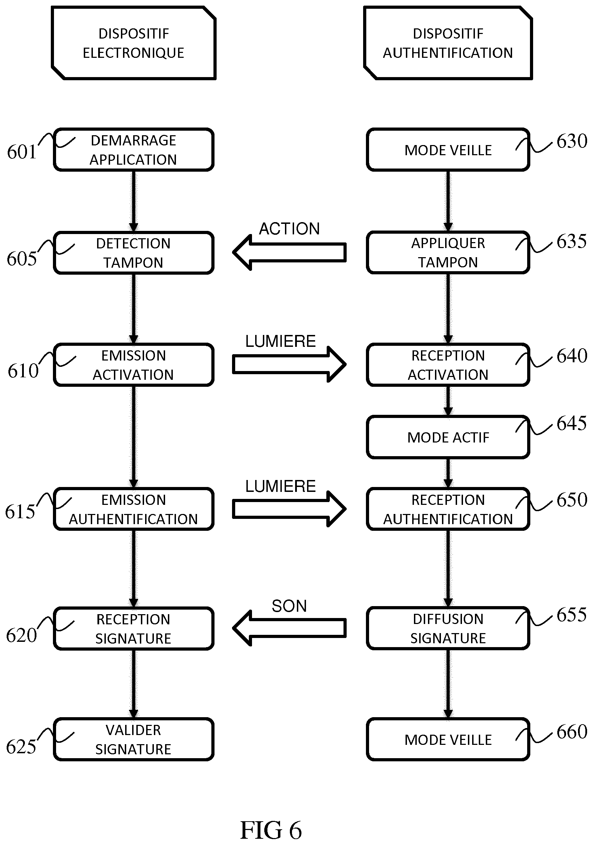

L'invention est définie dans les revendications indépendantes. Des exemples de mise en oeuvre sont défini dans les revendication dépendantes. La **FIG. 1** illustre schématiquement un exemple d'un tel dispositif d'authentification 100 selon un mode de réalisation divulgué dans la demande de brevet précédemment citée (la présente Fig. 1 correspondant à la Fig. 6 de la demande de brevet international citée). Selon ce mode de réalisation, le dispositif d'authentification 100 est visuellement similaire à un tampon. Le dispositif d'authentification 100 comprend un manche 120, et un timbre 110. Le dispositif d'authentification 100 comprend une pluralité de picots, ou plots, disposés sur une face du timbre 110. La Fig. 1 étant une vue de profil du dispositif d'authentification 100, seuls trois picots 150, 160 et 170 sont représentés. Les picots sont avantageusement constitués d'un matériau souple. Cette souplesse permet un contact des picots avec la surface d'un écran d'un dispositif électronique type « *smartphone* » ou tablette sans risque d'abîmer l'écran. Au moins deux picots parmi la pluralité de picots sont constitués d'un matériau conducteur de l'électricité (ci-après « conducteur »), les autres picots étant constitués d'un matériau isolant électrique.

Le dispositif d'authentification 100 comprend au moins un moyen pour détecter une pression exercée sur au moins un des picots. Par exemple, un picot comprend en son sein un interrupteur, activé lorsque ledit picot est pressé contre une surface, par exemple un écran d'un dispositif électronique. Les picots peuvent être montés sur un support mobile à l'intérieur du dispositif d'authentification 100, avec un ressort de rappel. Une pression sur les picots peut alors déclencher un interrupteur lié au support mobile.

Le fonctionnement du dispositif d'authentification 100 dépend en particulier d'une étape de détection d'une pression sur le picot comprenant l'interrupteur. Ceci nécessite qu'un utilisateur du dispositif d'authentification 100 presse celui-ci contre la surface d'un écran tactile d'un smartphone par exemple. Il a été constaté à l'usage qu'un certain nombre d'utilisateurs ont une certaine appréhension à réaliser ce geste, craignant d'abîmer l'écran de leur smartphone, par exemple en aggravant une fissure existante. Cette appréhension est totalement injustifiée en pratique, les picots souples ne pouvant pas endommager l'écran. Elle n'en est pas moins problématique pour l'acceptation de l'usage du dispositif d'authentification 100.

Il est donc nécessaire de proposer un dispositif d'authentification qui puisse pallier les inconvénients du dispositif d'authentification 100, tout en continuant à préserver une simplicité d'utilisation similaire à celle d'un tampon encreur classique.

La présente invention concerne un dispositif d'authentification destiné à être utilisé avec un dispositif électronique comprenant un écran et un émetteur-récepteur radio, le dispositif d'authentification étant caractérisé en ce qu'il comprend :
- un récepteur lumineux, disposé sur une face du dispositif d'authentification destinée à être placée en face de l'écran,
- un émetteur-récepteur radio,
- une mémoire comprenant une clef de chiffrement,
le dispositif d'authentification étant adapté pour :
- recevoir, via le récepteur lumineux, et décoder un signal lumineux dit d'identification émis par l'écran, le signal lumineux dit d'identification encodant un message comprenant une information d'identification,
- diffuser l'information d'identification via son émetteur-récepteur radio,
- recevoir, via son émetteur-récepteur radio, une demande d'établissement d'une connexion de la part du dispositif électronique, et,
- établir la connexion avec le dispositif électronique,
- recevoir, via la connexion établie, un message comprenant une information à chiffrer,
- chiffrer ladite information en utilisant la clef de chiffrement,
- émettre un message vers le dispositif électronique, le message comprenant l'information chiffrée.

Avantageusement, et contrairement au dispositif d'authentification divulgué dans la demande de brevet international PCT/EP2016/075235, l'activation du présent dispositif d'authentification est faite au moyen du récepteur lumineux. L'utilisation du récepteur lumineux permet ainsi de remédier à l'appréhension des utilisateurs craignant de presser un dispositif d'authentification contre l'écran de leur smartphone. En effet, il n'est pas nécessaire d'exercer une quelconque pression du dispositif d'authentification contre l'écran d'un smartphone pour activer le dispositif d'authentification. De plus, l'utilisation du récepteur lumineux permet avantageusement la transmission par le dispositif électronique, au moyen d'un signal lumineux, d'informations permettant l'établissement d'une connexion radio entre le dispositif électronique et le dispositif d'authentification. De plus, contrairement à un interrupteur, qui peut être actionné de façon involontaire, l'utilisation d'un signal lumineux particulier pour activer le dispositif d'authentification rend cette étape d'activation plus sûre et moins prône aux activations involontaires. Cela peut être particulièrement avantageux pour un dispositif d'authentification dont le nombre d'utilisations est limité, chaque activation involontaire réduisant sinon d'autant la durée de vie du dispositif d'authentification. L'établissement d'une connexion radio entre le dispositif d'authentification et le dispositif électronique permet un échange de données bilatéral, et en particulier l'envoi, par le dispositif électronique, de données pouvant être chiffrées par le dispositif d'authentification. La clef de chiffrement reste donc au sein du dispositif d'authentification et n'est jamais transmise au dispositif électronique.

Selon un mode de réalisation complémentaire de l'invention, le signal lumineux dit d'identification encodant un message comprenant de plus une information d'authentification, le dispositif d'authentification est adapté pour, ultérieurement à l'étape de réception de la demande d'établissement de la connexion, sécuriser l'établissement de la connexion en utilisant l'information d'authentification.

Selon un mode de réalisation complémentaire de l'invention, le dispositif d'authentification comprenant un premier mode de fonctionnement, dit mode veille, et un deuxième mode de fonctionnement, dit mode actif, le mode veille étant caractérisé par une consommation énergétique du dispositif d'authentification inférieure à celle du mode actif, le dispositif d'authentification est adapté pour, préalablement à la réception du signal lumineux d'identification :
- fonctionner dans le premier mode de fonctionnement, dit mode veille,
- recevoir, via le récepteur lumineux, et décoder un signal lumineux dit d'activation émis par l'écran, le signal lumineux dit d'activation encodant un message comprenant une information d'activation,
- déterminer la validité de l'information d'activation reçue, et, si l'information d'activation est valide, et,
- basculer dans le deuxième mode de fonctionnement dit mode actif.

Selon un mode de réalisation complémentaire de l'invention, le dispositif d'authentification comprend une jupe souple et opaque disposée autour du récepteur lumineux, la jupe étant adaptée pour, quand le dispositif d'authentification est en contact avec l'écran du dispositif électronique, permettre uniquement la captation par le récepteur lumineux d'une lumière émise par l'écran.

Selon un mode de réalisation complémentaire de l'invention, le dispositif d'authentification étant destiné à être utilisé avec un dispositif électronique comprenant un écran tactile capacitif, le dispositif d'authentification comprend une pluralité de picots disposés sur la face du dispositif d'authentification destinée à être placée en face de l'écran, au moins deux picots étant constitués d'un matériau conducteur, les autres picots étant constitués d'un matériau isolant, tous les picots étant d'un aspect identique.

Selon un mode de réalisation complémentaire de l'invention, le dispositif d'authentification comprend une pluralité de récepteurs lumineux disposés sur la face du dispositif d'authentification destinée à être placée en face de l'écran, chaque récepteur lumineux étant entouré d'une jupe souple et opaque.

Selon un mode de réalisation complémentaire de l'invention, une même jupe souple et opaque peut entourer une pluralité de récepteurs lumineux.

Selon un mode de réalisation complémentaire de l'invention, la mémoire est un élément sécurisé.

Selon un mode de réalisation complémentaire de l'invention, les émetteurs-récepteurs radio sont conformes à une norme Bluetooth.

L'invention concerne également un système d'authentification, le système comprenant :
- un dispositif d'authentification tel que décrit dans le présent document,
- un dispositif électronique comprenant un écran et un émetteur-récepteur radio,
le dispositif électronique exécutant une application d'authentification et étant adapté pour :
- émettre le signal lumineux dit d'activation,
- émettre le signal lumineux dit d'identification,
- détecter, via son émetteur-récepteur radio, la diffusion de l'information d'identification par le dispositif d'authentification,
- établir, via son émetteur-récepteur radio, une connexion avec le dispositif d'authentification,
- émettre vers le dispositif d'authentification, via la connexion, un message comprenant une information à chiffrer,
- recevoir, via la connexion, un message comprenant une information chiffrée.

L'invention concerne également un procédé d'authentification, le procédé étant exécuté par un dispositif électronique comprenant un écran et un émetteur-récepteur radio, le procédé comprenant les étapes de :
- émettre un signal lumineux dit d'activation, le signal lumineux dit d'activation encodant un message comprenant une information d'activation pour un dispositif d'authentification,
- émettre un signal lumineux dit d'identification, le signal lumineux dit d'identification encodant un message comprenant une information d'identification,
- détecter, via son émetteur-récepteur radio, la diffusion de l'information d'identification par le dispositif d'authentification,
- établir, via son émetteur-récepteur radio, une connexion avec le dispositif d'authentification,
- transmettre au dispositif d'authentification, via la connexion, une information à chiffrer,
- recevoir, via la connexion, une information chiffrée.

La présente invention concerne aussi un programme d'ordinateur, qui peut être stocké sur un support et/ou téléchargé d'un réseau de communication, afin d'être lu et exécuté par un processeur, ou implémenté dans un microcontrôleur, d'un dispositif d'authentification ou d'un dispositif électronique. Ce programme d'ordinateur comprend des instructions pour implémenter tout ou partie des étapes du procédé d'authentification décrit ci-après selon l'une quelconque de ses variantes. L'invention concerne également des moyens de stockage comprenant un tel programme d' ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **FIG. 1** illustre un dispositif d'authentification tel que divulgué dans la demande de brevet international PCT/EP2016/075235 déposée le 20 octobre 2016 ;
- la **FIG. 2** illustre schématiquement un exemple d'architecture matérielle d'un dispositif d'authentification selon un mode de réalisation de l'invention ;
- la **FIG. 3** est une vue de dessous du dispositif d'authentification selon un mode de réalisation de l'invention ;
- la **FIG. 4** illustre schématiquement un système d'authentification selon un mode de réalisation de l'invention ;
- la **FIG. 5** est un organigramme d'un procédé d'authentification selon un mode de réalisation de l'invention ;
- la **FIG. 6** est un organigramme d'un procédé d'authentification selon un mode de réalisation alternatif de l'invention.

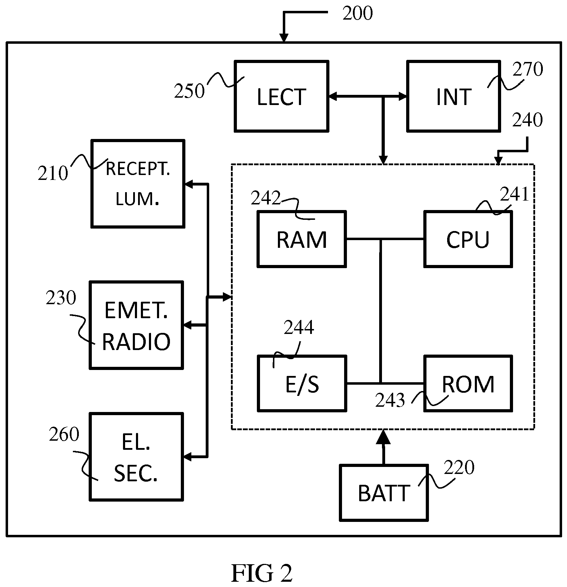

La **FIG. 2** illustre schématiquement un exemple d'architecture matérielle d'un dispositif d'authentification 200 selon un mode de réalisation de l'invention. Le dispositif d'authentification 200 présente une forme globalement similaire au dispositif d'authentification illustré dans la Fig. 1. Dans ce mode de réalisation de l'invention, le dispositif d'authentification 200 comprend un microcontrôleur 240. Le microcontrôleur 240 est un dispositif électronique qui comprend une unité programmable de traitement de données (*Central Processing Unit* en anglais) CPU 241, une mémoire vive (*Random Access Memory* en anglais) RAM 242, une mémoire, ou module de stockage, de type non volatile ROM 243 et une ou plusieurs interfaces d'entrée/sortie E/S 244. Les interfaces E/S 244 peuvent comprendre des convertisseurs de signaux analogiques-numériques (Convertisseur Analogique Numérique ; CAN) ou numériques-analogiques (Convertisseur Numérique Analogique ; CNA). Selon des modes de réalisation alternatifs de l'invention, les fonctionnalités du microcontrôleur 240 sont remplies par un circuit logique programmable (*Field-Programmable Gate Arrays* - FPGA - en anglais), un processeur de signal numérique (*Digital Signal Processor* - DSP - en anglais), un circuit intégré propre à une application (*Application-Specific Integrated Circuit -* ASIC - en anglais) ou tout autre dispositif équivalent. Le dispositif d'authentification 200 comprend un module d'alimentation électrique BATT 220, par exemple une batterie ou une pile. Le dispositif d'authentification 200 comprend un récepteur lumineux 210. Ce récepteur lumineux peut être de type photodiode ou photorésistance. Le récepteur lumineux 210 est situé sous le dispositif d'authentification 200, sur la face du dispositif d'authentification 200 destiné à venir au contact d'un écran d'un dispositif électronique tel un smartphone. Le récepteur lumineux 210 est adapté pour capter un signal lumineux et le convertir en un signal électrique qui est transmis au microcontrôleur 240 ou au processeur CPU 241. Le récepteur lumineux 210 peut ainsi décoder un signal lumineux modulé en fréquence, phase et/ou en amplitude - ou toute autre technique de modulation connue -, permettant une communication unidirectionnelle vers le dispositif d'authentification 200. Le dispositif d'authentification 200 peut comprendre une pluralité de récepteurs lumineux 210. Le dispositif d'authentification 200 comprend un émetteur-récepteur radio 230. L'émetteur-récepteur radio 230 est typiquement de type Bluetooth ou Bluetooth Low Energy (BLE). Selon des modes de réalisations alternatifs de l'invention, l'émetteur-récepteur radio 230 est conforme à une norme Wi-Fi, NFC (« Near Field Communication » en anglais) ou toute autre norme de communication radio. L'émetteur-récepteur radio 230 est possiblement intégré dans le microcontrôleur 240. L'émetteur-récepteur radio 230 est adapté pour établir une connexion radio avec un dispositif électronique comprenant un émetteur-récepteur de même type. Le dispositif d'authentification 200 et ledit dispositif électronique peuvent alors échanger des messages comprenant des informations, ou données. Avantageusement, la puissance d'émission de l'émetteur-récepteur radio 230 est réduite au minimum, le dispositif électronique ayant vocation à être au contact du dispositif d'authentification 200 lors de l'utilisation du dispositif d'authentification 200. Cela permet de réduire de possibles interférences et de préserver la confidentialité des échanges. Selon un mode de réalisation de l'invention, le dispositif d'authentification 200 comprend un élément sécurisé 260. Un élément sécurisé (SE, « *Secured Elément »* en anglais) est un composant matériel inviolable capable de contenir et/ou traiter des données confidentielles. Possiblement, l'élément sécurisé 260 comprend un processeur sécurisé, un stockage inviolable et de la mémoire d'exécution. Une clef de chiffrement peut typiquement être enregistrée dans le stockage inviolable. L'élément sécurisé peut alors chiffrer au moyen de la clef de chiffrement toute donnée ou information qui lui serait fournie sans qu'il soit possible d'accéder à aucun moment à la clef de chiffrement. Avantageusement, la clef de chiffrement est une clef dite « clef privée » pour la mise en place d'un chiffrement dit « asymétrique ». Un certificat et/ou une clef de chiffrement associée dite « publique » peut être enregistré en association avec la clef de chiffrement dans l'élément sécurisé 260. Alternativement, une clef de chiffrement peut être enregistrée dans la mémoire ROM 243 du microcontrôleur 240.

Selon le mode de réalisation de l'invention, le dispositif d'authentification 200 peut comprendre un lecteur d'empreintes digitales LECT 250 ou bien un interrupteur 270. Le fonctionnement décrit ci-après du dispositif d'authentification 200 peut être ainsi conditionné à la présence d'une empreinte prédéterminée sur le lecteur d'empreintes 250 ou à l'activation préalable de l'interrupteur 270.

Le dispositif d'authentification 200 est, comme le dispositif d'authentification de la Fig. 1, au moins partiellement recouvert d'un matériel conducteur afin que le dispositif d'authentification puisse fonctionner avec un écran tactile d'un dispositif électronique.

Le dispositif d'authentification 200 peut comprendre une jupe souple et opaque disposée autour du récepteur lumineux 210. La jupe est adaptée pour, quand le dispositif d'authentification 200 est en contact avec un écran d'un dispositif électronique, permettre uniquement la captation par le récepteur lumineux d'une lumière émise par l'écran. La jupe, par exemple constituée de caoutchouc, permet d'isoler lumineusement le récepteur lumineux 210 de tout autre signal lumineux que celui émis par l'écran contre lequel le dispositif d'authentification 200 est en contact. Dans l'hypothèse où un signal lumineux n'est présent sur l'écran du dispositif électronique que sur la seule zone de l'écran faisant face au récepteur lumineux 210, la jupe permet alors de cacher ce signal lumineux, seul le récepteur lumineux 210 en ayant la visibilité, préservant ainsi la confidentialité du signal lumineux émis par l'écran. Si le dispositif d'authentification 200 comprend une pluralité de récepteurs lumineux 210, une même jupe peut entourer tous les récepteurs lumineux, ou bien chaque récepteur lumineux peut être entouré d'une jupe. Ainsi, lorsque le dispositif d'authentification 200 comprend une pluralité de récepteurs lumineux disposés sur la face du dispositif d'authentification 200 destinée à être placée en face de l'écran, chaque récepteur lumineux 210 étant entouré d'une jupe souple et opaque, cette jupe, étant commune à tous les récepteurs lumineux 210 ou bien individuelle. Il est possible de regrouper certains récepteurs lumineux 210 afin de les entourer d'une même jupe. La jupe est possiblement constituée d'un matériel conducteur permettant l'activation d'un écran tactile d'un dispositif électronique.

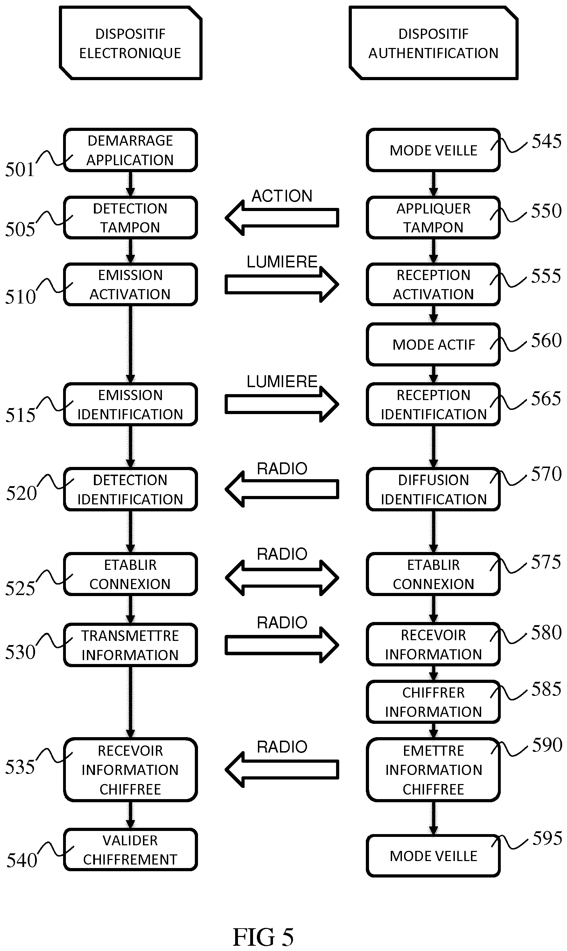

Selon le mode de réalisation de l'invention, le dispositif d'authentification 200 peut comprendre une pluralité de picots disposés sur la face du dispositif d'authentification 200 destinée à être placée en face de l'écran d'un dispositif électronique, au moins deux picots étant constitués d'un matériau conducteur, les autres picots étant constitués d'un matériau isolant, tous les picots étant d'un aspect identique. Ces picots sont similaires à ceux décrits dans la demande de brevet international précédemment citée. La présence des picots, dont certains sont conducteurs, permet l'activation d'un écran tactile d'un dispositif électronique. La détection, par un dispositif électronique, de la présence des picots conducteurs peut permettre de démarrer les étapes d'un procédé d'authentification, comme décrit ci-après dans les Figs. 5 et 6. Le dispositif électronique peut aussi détecter un motif constitué par les picots conducteurs et en déduire un positionnement relatif du ou des récepteurs lumineux 210 du dispositif d'authentification 200. Le dispositif électronique peut alors n'activer qu'une zone faisant face à un récepteur lumineux pour émettre un signal lumineux plutôt que toute la surface de l'écran. Cela permet une utilisation simultanée de plusieurs récepteurs lumineux, chaque zone de l'écran face à un récepteur lumineux pouvant émettre un signal lumineux différent, et une préservation de la confidentialité.

Selon un mode de réalisation de l'invention, le dispositif d'authentification comprend un premier mode de fonctionnement, dit mode veille, et un deuxième mode de fonctionnement, dit mode actif, le mode veille étant caractérisé par une consommation énergétique globale du dispositif d'authentification inférieure à celle du mode actif.

Possiblement, le microcontrôleur 240 et/ou le processeur CPU 241 peuvent fonctionner dans un mode basse consommation, dit veille. Dans ce mode veille, le microcontrôleur 240 et/ou le processeur CPU 241 consomment très peu d'énergie et n'exécutent aucune opération. A l'inverse, le microcontrôleur 240 et/ou le processeur CPU 241 peuvent aussi fonctionner dans un mode dit actif, dans lequel ils exécutent des opérations et consomment, comparativement au mode veille, plus d'énergie. Les autres composants électroniques du dispositif d'authentification 200 peuvent eux aussi disposer d'un mode de fonctionnement dit veille et d'un mode de fonctionnement dit actif. Le mode de fonctionnement dit veille d'un composant est caractérisé par une consommation énergétique dudit composant inférieure à la consommation énergétique du même composant dans le mode actif, voire nulle. Le microcontrôleur 240 et/ou le processeur CPU 241 peuvent contrôler la bascule entre le mode veille et le mode actif des différents composants du dispositif d'authentification 200. Ainsi, selon un mode de réalisation de l'invention, dans le mode veille, le microcontrôleur 241 est en mode basse consommation, le récepteur lumineux 210 est actif et tous les autres éléments du dispositif d'authentification sont soit en mode basse consommation s'il existe, soit désactivés afin de réduire la consommation électrique globale du dispositif d'authentification 200. Ainsi, le dispositif d'authentification 200 peut être activé par la réception d'un signal lumineux, possiblement particulier, comme décrit ci-après. Ce signal lumineux est alors dit signal d'activation. Le dispositif d'authentification 200 peut basculer dans le mode actif à réception du signal d'activation. Le dispositif d'authentification 200 peut rebasculer dans le mode veille passé un certain délai ou à la fin d'un procédé d'authentification tel que décrit ci-après.

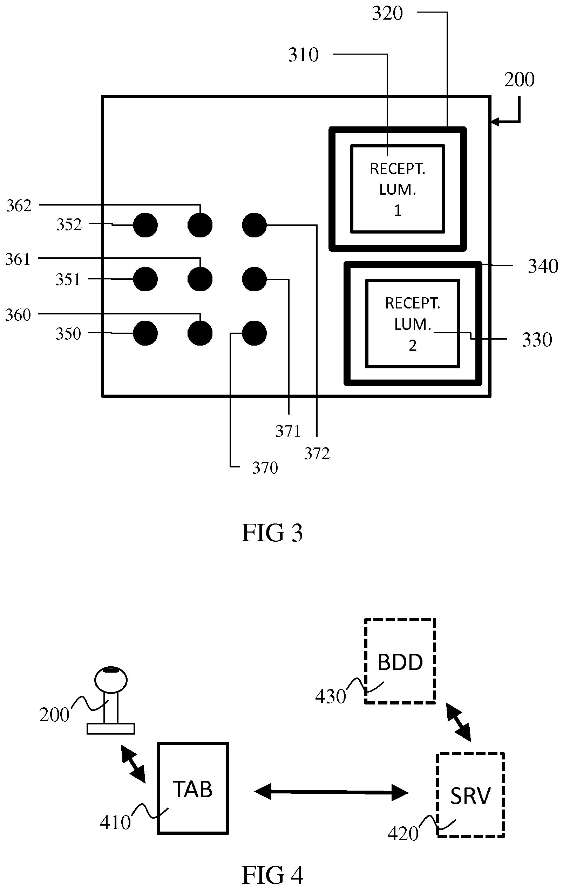

La **FIG. 3** est une vue de dessous du dispositif d'authentification 200 selon un mode de réalisation de l'invention. Le dispositif d'authentification 200 comprend ici neuf picots 350, 351, 352, 360, 361, 362, 370, 371 et 372, similaires aux picots du dispositif d'authentification divulgué dans la demande de brevet international précédemment citée. Ces picots, du moins les picots conducteurs, permettent une activation d'un écran tactile d'un dispositif électronique tel un smartphone. Deux récepteurs lumineux 310 et 330 sont représentés. Chaque récepteur lumineux 310 et 330 est entouré d'une jupe, respectivement 320 et 340. La détection d'un motif constitué par au moins deux picots conducteurs sur l'écran, plus précisément la localisation de ce motif sur l'écran, permet de situer l'emplacement des deux récepteurs lumineux faisant face à l'écran. L'emplacement des récepteurs lumineux sur la face du dispositif d'authentification 200 est alors associé à un motif prédéterminé des picots, la reconnaissance du motif par un dispositif électronique et la localisation du motif sur l'écran permettant d'en déduire la localisation des récepteurs lumineux.

Avantageusement, l'utilisation d'une pluralité de récepteurs lumineux permet de réduire les risques d'activation erronée du dispositif d'authentification 200. En effet, un signal lumineux intempestif sera reçu de manière égale par chaque récepteur lumineux alors que le signal d'activation peut être différent pour chaque récepteur lumineux. Cela permet aussi d'augmenter la bande passante disponible, chaque récepteur lumineux pouvant recevoir simultanément des données.

La **FIG. 4** illustre schématiquement un système d'authentification selon un mode de réalisation de l'invention. Le système d'authentification comprend un dispositif d'authentification 200, un dispositif électronique 410 et possiblement un serveur 420 et une base de données 430. Le dispositif électronique 410 comprend un écran et un émetteur-récepteur radio compatible avec l'émetteur-récepteur du dispositif d'authentification 200. L'écran est possiblement de type tactile. L'écran est possiblement de type capacitif. Le dispositif électronique peut être un smartphone, une tablette numérique, un ordinateur portable ou tout autre dispositif électronique. Le dispositif électronique 200 est adapté pour exécuter un programme d'ordinateur (ou application) comprenant des instructions pour mettre en oeuvre le procédé d'authentification décrit ci-après. Le programme d'ordinateur peut être enregistré dans une mémoire du dispositif électronique 410 ou bien téléchargé à la demande par le dispositif électronique 410, par exemple depuis le serveur 420. Le serveur 420 et/ou la base de données 430 peut comprendre une mémoire dans laquelle est enregistrée une correspondance entre un motif formé par des picots d'un dispositif d'authentification 200 et une position des récepteurs lumineux dudit dispositif d'authentification 200. La mémoire du serveur 420 et/ou de la base de données 430 peut aussi comprendre une liste de certificats ou de clefs publiques associés à des dispositifs d'authentification 200, chaque dispositif d'authentification 200 étant associé à un numéro d'identification unique.

La **FIG. 5** est un organigramme d'un procédé d'authentification selon un mode de réalisation de l'invention. Selon ce mode de réalisation, le dispositif d'authentification 200 comprend une pluralité de picots, au moins deux étant conducteurs, et un récepteur lumineux 210, comme illustré dans la Fig. 3. Le procédé est mis en oeuvre par un système tel que celui décrit dans la Fig. 4, le système comprenant au moins le dispositif d'authentification 200 et le dispositif électronique 410.

Dans une première étape 501, un utilisateur lance (démarre) une application d'authentification sur un dispositif électronique 410. L'application présente alors une interface sur l'écran du dispositif électronique 410 invitant l'utilisateur, ou possiblement un autre utilisateur possédant le dispositif d'authentification 200, à « tamponner » l'écran, c'est-à-dire à mettre en contact le dispositif d'authentification 200 avec l'écran du dispositif électronique 410. Par défaut, le dispositif d'authentification 200 est dans le mode dit veille (étape 545).

Si un utilisateur met le dispositif d'authentification 200 en contact avec l'écran (étape 550), alors, dans une étape 505, le dispositif électronique 410 détecte la présence du dispositif d'authentification grâce aux picots conducteurs. Possiblement, le dispositif électronique 410 détermine un motif prédéterminé constitué par les au moins deux picots conducteurs. Le dispositif électronique 410 peut rechercher dans une mémoire interne ou en interrogeant le serveur 420 et/ou la base de données 430 une position du récepteur lumineux sur la base du dispositif d'authentification 200, la ou les positions étant associées audit motif. La position est déterminée relativement à la position du motif.

Le dispositif électronique 410 passe alors à l'étape 510 en déclenchant l'émission d'un signal lumineux dit d'activation par l'écran. Si le dispositif électronique 410 a déterminé précédemment l'emplacement du récepteur lumineux du dispositif d'authentification 200, alors possiblement l'émission lumineuse n'est activée que sur la zone de l'écran faisant face au récepteur lumineux, et sur une surface adaptée à la taille du récepteur lumineux. Si le récepteur lumineux est entouré d'une jupe, alors le signal lumineux émis ne peut être capté que par le récepteur lumineux, préservant ainsi la confidentialité. Le signal lumineux, dit d'activation, encode un message comprenant une information d'activation. Le signal lumineux d'activation est affiché, possiblement répété en boucle, pendant une durée de l'ordre de quelques secondes. L'information d'activation est une information prédéterminée. Possiblement, l'information d'activation est prédéterminée et associée au dispositif d'authentification 200, le dispositif électronique 410 retrouvant l'information d'activation associée au dispositif d'authentification 200 appliqué grâce à la reconnaissance du motif formé par les picots. Possiblement, en cas de pluralité de récepteurs lumineux, une information d'activation différente est associée à chaque récepteur lumineux d'un même dispositif d'authentification.

Dans une étape 555, le dispositif d'authentification 200 reçoit, via le récepteur lumineux, et décode le signal lumineux dit d'activation émis par l'écran. Encoder une information dans le signal d'activation permet au dispositif d'authentification 200 de faire la distinction entre un signal lumineux parasite et un signal lumineux destiné à l'activer. Si le dispositif d'authentification 200 détermine que le signal lumineux reçu correspond bien à un signal lumineux d'activation, alors, dans une étape 560, le dispositif d'authentification 200 bascule dans le mode de fonctionnement dit actif. Le dispositif d'authentification 200 peut alors en particulier activer son émetteur-récepteur radio. Dit autrement, le dispositif d'authentification 200 détermine la validité de l'information d'activation reçue, et, si l'information d'activation est valide, alors le dispositif d'authentification bascule (ou passe) dans le mode de fonctionnement dit actif. L'information d'activation prédéterminée est préalablement enregistrée dans une mémoire du dispositif d'authentification, par exemple lors de la production ou lors d'une phase d'initialisation du dispositif d'authentification 200. Le dispositif d'authentification 200 détermine la validité du signal d'activation en comparant la valeur reçue de l'information d'activation avec celle enregistrée dans sa mémoire.

Selon un mode de réalisation de l'invention, l'étape 555 comprend trois sous-étapes :
- le dispositif d'authentification 200 étant dans le mode veille, le récepteur lumineux 210 reste actif et comprend un circuit électronique adapté pour détecter un signal lumineux répondant à certaines caractéristiques. Ainsi, le circuit électronique du récepteur lumineux 210 peut être adapté pour détecter un signal lumineux d'une certaine durée minimale, intensité lumineuse minimale et/ou fréquence (ou toute autre caractéristique physique permettant de caractériser un signal lumineux), ledit signal lumineux étant converti en un signal électrique en sortie du récepteur lumineux 210 pour possiblement transmission de ce signal électrique au microcontrôleur 240 et/ou le processeur 241,
- lorsqu'un tel signal lumineux est détecté par le récepteur lumineux 210, le récepteur lumineux 210 est adapté pour activer le microcontrôleur 240 et/ou le processeur 241, celui-ci basculant alors dans le mode actif,
- le microcontrôleur 240 et/ou le processeur 241 étant dans le mode actif, le microcontrôleur 240 et/ou le processeur 241 peuvent alors analyser le signal électrique correspondant au signal lumineux transmis par le récepteur lumineux 210 ; le microcontrôleur 240 et/ou le processeur 241 peuvent en particulier décoder le signal et vérifier si le signal reçu correspond bien à un signal d'activation.

Selon un mode de réalisation de l'invention, après avoir émis pendant une durée prédéterminée le signal lumineux d'activation, le dispositif électronique 410 passe alors à l'étape 515 et émet un signal lumineux dit d'identification. Le signal lumineux dit d'identification encode un message comprenant une information d'identification. Possiblement, le signal d'identification encode aussi une information d'authentification. Dit autrement, après avoir émis le signal d'activation, le dispositif électronique 410 émet ensuite un signal d'identification. Après, ou en même temps, le dispositif électronique 410 se met à l'écoute via son émetteur-récepteur radio des dispositifs émettant un signal. Dit autrement, dans un contexte Bluetooth, le dispositif électronique 410 se met à la recherche des dispositifs Bluetooth visibles.

Selon un mode de réalisation complémentaire de l'invention, le message comprenant l'information d'identification, et possiblement l'information d'authentification, comprend une autre information d'authentification. Cette autre information d'authentification peut correspondre par exemple à un code PIN (« *Personal Identification Number* » en anglais) saisi sur le dispositif électronique 410 lors d'une étape précédente par un utilisateur du dispositif électronique 410.

Selon un mode de réalisation alternatif de l'invention, les étapes 510 et 515 sont rassemblées en une seule étape, le dispositif électronique 410 émettant un signal lumineux, possiblement une pluralité de fois, comprenant, dans une première partie, un signal lumineux correspondant au signal lumineux d'activation, et, dans une seconde partie, un signal lumineux correspondant au signal d'identification. Le dispositif d'authentification 200 utilise alors la première partie du signal lumineux pour être activé (étapes 550 et 560) puis la seconde partie pour les étapes 565 et ultérieure.

Il est à noter que selon le mode de réalisation de l'invention, le récepteur lumineux 210, ou certaines parties tels le circuit électronique de conversion du signal lumineux en un signal électrique, peut être intégré dans le microcontrôleur 240 et/ou le processeur 241. Dans ce mode de réalisation de l'invention, certaines parties du microcontrôleur 240 et/ou le processeur 241 peuvent alors être dans le mode de fonctionnement veille alors que d'autres sont dans le mode de fonctionnement dit actif. Certaines parties du microcontrôleur 240 et/ou le processeur 241, fonctionnant typiquement dans le mode actif, peuvent alors permettre la bascule du microcontrôleur 240 et/ou le processeur 241 entre le mode veille et le mode actif.

Le dispositif d'authentification 200, dans l'étape 565, reçoit, via le récepteur lumineux, et décode le signal lumineux dit d'identification émis par le dispositif électronique 410. Le dispositif d'authentification 200 retrouve ainsi l'information d'identification et, si elle est présente, l'information d'authentification.

Si une autre information d'authentification est comprise dans le message, c'est-à-dire encodée dans le signal lumineux dit d'identification, alors le dispositif d'authentification 200 peut vérifier si cette autre information d'authentification, typiquement un code PIN, correspond à une information d'authentification prédéterminée enregistrée dans une mémoire du dispositif d'authentification 200. Selon ce mode de réalisation, si le code PIN correspond, les étapes suivantes sont réalisées. Si le code PIN ne correspond pas, ou est absent, le dispositif d'authentification 200 peut ne pas exécuter les étapes suivantes et rebasculer en mode veille.

Dans une étape suivante 570, le dispositif d'authentification 200 active la diffusion par son émetteur-récepteur radio de l'information d'identification. Dit autrement, si l'émetteur-récepteur du dispositif d'authentification 200 est un émetteur-récepteur Bluetooth, le dispositif d'authentification 200 diffuse un message comprenant l'information d'identification reçue lors de l'étape 565. Possiblement, si une information d'authentification a été reçue, la connexion au réseau Bluetooth exigera la fourniture de cette information d'authentification pour établir une connexion. Dit autrement, l'information d'identification est utilisée pour nommer - identifier - le réseau Bluetooth, l'information d'authentification est utilisée comme mot de passe pour établir une connexion avec le dispositif d'authentification 200.

Dans une étape 520, le dispositif électronique 410 détecte le dispositif d'authentification 200 grâce à sa diffusion de l'information d'identification. Dit autrement, dans un contexte Bluetooth, le dispositif électronique 410 reconnaît le dispositif d'authentification 200 grâce à l'information d'identification comprise dans le message diffusé par le dispositif d'authentification 200, ce nom Bluetooth étant l'information d'identification. Si le dispositif d'authentification 200 n'est pas détecté par le dispositif électronique 410, alors le dispositif électronique stoppe le procédé de détection de dispositif électronique Bluetooth et possiblement l'émission de tout signal lumineux.

Dans une étape suivante 525, le dispositif électronique 410 peut alors demander à établir une connexion radio avec le dispositif d'authentification 200. Si une information d'authentification a été envoyée, alors le dispositif électronique 410 utilise cette information pour s'authentifier. L'information d'identification et, possiblement, l'information d'authentification ayant été transmises par le signal lumineux, la présence d'une jupe autour du récepteur lumineux sur le dispositif d'authentification 200 permet de garantir que seul ce dispositif d'authentification 200 peut recevoir ces informations. Ainsi, seul ce dispositif d'authentification 200 peut établir un réseau Bluetooth avec pour nom l'information d'identification. Un autre dispositif d'authentification voisin ne peut pas capter le signal lumineux.

Dans une étape simultanée 575, le dispositif d'authentification 200 reçoit la demande d'établissement de connexion de la part du dispositif électronique. La connexion est soit établie automatiquement, soit le dispositif d'authentification 200 demande au dispositif électronique 410 la transmission, par radio, de l'information d'authentification. L'information d'authentification étant connue du dispositif d'authentification 200 et du dispositif électronique 410 c'est-à-dire partagée, tout mécanisme d'authentification utilisant une donnée partagée peut être avantageusement utilisé. Si l'authentification échoue et/ou sans demande d'établissement de connexion, le dispositif d'authentification 200 peut rebasculer dans le mode de fonctionnement dit veille.

La connexion étant établie, le dispositif électronique 410 peut, dans une étape 530, transmettre une information ou des données à chiffrer au dispositif d'authentification 200 via cette connexion radio. Il est à noter que, suivant les technologies utilisées, la connexion radio, par exemple de type Bluetooth, permet un débit de transmission de données du dispositif électronique vers le dispositif d'authentification supérieur à la connexion unidirectionnelle permise par l'émission du signal lumineux. Cette information peut comprendre un identifiant unique du dispositif électronique et/ou de l'application et/ou une information aléatoire.

Dans une étape 580, le dispositif d'authentification 200 reçoit les informations ou données émises par le dispositif électronique 410 lors de l'étape 530.

Dans une étape suivante 585, le dispositif d'authentification 200 détermine quelles sont les données à chiffrer. Le dispositif d'authentification 200 chiffre ces données à chiffrer en utilisant la clef de chiffrement possiblement enregistrée dans un élément sécurisé ou dans une mémoire. Une information aléatoire ou prédéterminée peut être ajoutée à l'information à chiffrer avant le chiffrement.

Dans une étape suivante 590, le dispositif d'authentification 200 envoie un message au dispositif électronique 410 comprenant les données chiffrées.

Selon le mode de réalisation de l'invention, le dispositif d'authentification 200 peut se mettre ensuite en l'attente d'autres données à chiffrer, répétant les étapes 580, 585 et 590, ou bien, dans une étape 595, basculer dans le mode de fonctionnement dit veille. La situation, pour le dispositif d'authentification 200, redevient celle de l'étape 545 (sauf si le dispositif d'authentification 200 comporte un compteur du nombre d'utilisations, celui-ci ayant été incrémenté/décrémenté selon l'implémentation lors de l'une des étapes 565 à 590, préférentiellement l'étape 585).

Selon un mode de réalisation complémentaire de l'invention, suite à l'étape 590, le dispositif d'authentification 200 peut établir une nouvelle connexion radio avec un dispositif électronique prédéterminé et émettre un message comprenant des informations sur l'opération de chiffrement effectuée lors de l'étape 585. Dit autrement, le dispositif d'authentification 200 peut, suite à l'exécution du procédé précédemment décrit, effectuer une étape dite de « *reporting* » (en anglais dans le texte), ou de rapport, en se connectant à un dispositif électronique prédéterminé. Possiblement, le dispositif d'authentification 200 demande alors, dans une étape d'initialisation, à être associé à un dispositif électronique prédéterminé adapté pour recevoir ledit rapport émis par le dispositif d'authentification 200. Selon un mode de réalisation de l'invention, le dispositif d'authentification 200 peut être associé à une clef USB (« *Universal Serial Bus »* en anglais) Bluetooth (ou « *dongle Bluetooth* » en anglais) adaptée à être connectée à, par exemple, un ordinateur ou une caisse enregistreuse électronique. Ceci permet avantageusement de conserver, sur un dispositif électronique autre que le dispositif électronique 410, des informations sur les opérations de chiffrement (ou de signature selon le mode de réalisation de l'invention) effectuées par le dispositif d'authentification 200.

Parallèlement, le dispositif électronique reçoit lors de l'étape 535 les données chiffrées. Le dispositif électronique 410 peut mettre en oeuvre une étape 540 de vérification du chiffrement effectué. Le dispositif électronique 410 peut par exemple retrouver, dans une mémoire ou auprès du serveur 420, un certificat ou une clef public associée à la clef de chiffrement utilisée par le dispositif d'authentification 200. Si le chiffrement effectué par le dispositif d'authentification 200 est validé, le dispositif électronique 410 retient les données chiffrées, sinon, celles-ci sont ignorées et possiblement l'application affiche un message d'erreur.

Selon un mode de réalisation alternatif de l'invention, le procédé est déclenché par l'activation d'un interrupteur par exemple similaire à celui décrit dans la demande de brevet international précédemment citée. Les étapes 510 et 555 correspondant à l'émission et à la réception/validation du signal lumineux d'activation ne sont alors pas réalisées.

La **FIG. 6** est un organigramme d'un procédé d'authentification selon un mode de réalisation alternatif de l'invention. Dans ce mode de réalisation alternatif, le dispositif d'authentification 200 ne comprend pas d'émetteur-récepteur radio ni d'élément sécurisé. Le dispositif d'authentification 200 comprend par contre un émetteur sonore. L'émetteur sonore est typiquement un transducteur électroacoustique, par exemple un cristal piézoélectrique. L'émetteur sonore émet avantageusement dans le domaine des ultrasons. La conception du dispositif d'authentification 200 en est donc facilitée et il consomme moins d'énergie. Dans ce mode de réalisation, le dispositif d'authentification 200 peut communiquer de façon unidirectionnelle vers un dispositif électronique à la condition que celui-ci comprenne un microphone. Le dispositif électronique étant typiquement un smartphone ou une tablette numérique, c'est bien le cas dans l'immense majorité des cas. De même, le dispositif électronique peut communiquer de façon unidirectionnelle vers le dispositif d'authentification 200 au moyen d'un signal lumineux émis par un écran, de façon similaire à ce qui a précédemment été décrit. Le dispositif d'authentification 200 peut ainsi comprendre une jupe autour de son récepteur lumineux. Le procédé d'authentification est simplifié par rapport à celui décrit dans la Fig. 5.

Le dispositif d'authentification 200, comme précédemment, est typiquement dans un mode de fonctionnement dit veille, c'est-à-dire à consommation énergétique réduite, en début de procédé (étape 630).

L'étape 601, exécutée par un dispositif électronique, est identique à l'étape 501 de la Fig. 5.

Dans une étape 635, similaire à l'étape 550 de la Fig. 5, un utilisateur applique le dispositif d'authentification 200 contre l'écran du dispositif électronique.

Celui-ci, dans une étape 605, détecte la présence du dispositif d'authentification 200 grâce aux picots conducteurs, comme dans l'étape 505 de la Fig. 5.

Le dispositif électronique, dans une étape 610, similaire à l'étape 510 de la Fig. 5, émet un signal lumineux d'activation.

De manière similaire aux étapes 555 et 560 de la Fig. 5, le dispositif d'authentification 200 détecte et valide l'information d'activation et, si valide, bascule dans un mode de fonctionnement dit actif.

Suite à l'émission du signal d'activation pendant un temps prédéterminé, le dispositif électronique, dans une étape 615, émet un signal lumineux d'authentification. Ce signal lumineux d'authentification encode un message comprenant une information d'authentification. Cette information d'authentification est possiblement aléatoire de type nonce afin d'éviter le risque d'attaque par rejeu.

Dans une étape 650, le dispositif d'authentification 200 reçoit et décode le signal lumineux d'authentification. Ensuite, dans une étape 655, le dispositif d'authentification 200 émet, via son émetteur sonore, un signal acoustique encodant une information dite signature. Cette information dite signature comprend l'information d'authentification reçue lors de l'étape 650 et un identifiant unique du dispositif d'authentification 200.

Dans une étape 620, le dispositif électronique, ayant précédemment activé son microphone, par exemple suite à l'étape 615, reçoit le signal acoustique et décode la signature. Le dispositif électronique vérifie que l'information d'authentification de la signature reçue correspond bien à celle envoyée lors de l'étape 615. Si ce n'est pas le cas, le procédé prend fin et l'application affiche un message d'erreur. Si l'information d'authentification correspond, le dispositif électronique peut vérifier, auprès par exemple d'un serveur 420 tel que décrit dans la Fig. 4, la validité de l'identifiant unique du dispositif d'authentification 200.

Selon un mode de réalisation alternatif de l'invention, l'invention concerne un dispositif d'authentification 200 n'étant pas constitué d'un matériau conducteur. En effet, certains usages du dispositif d'authentification 200, en particulier si l'utilisateur porte des gants, ne permettent pas d'utiliser le dispositif d'authentification 200 avec un écran tactile. Dans ce cas, le procédé décrit précédemment est adapté de la manière suivante :
- dès le démarrage de l'application (étape 501), le dispositif électronique 410 émet un signal lumineux prédéterminé,
- le dispositif d'authentification 200, initialement dans le mode veille, est placé par un utilisateur en face de l'écran du dispositif électronique 410 et reçoit et décode le signal lumineux prédéterminé ; si ce signal lumineux prédéterminé correspond à un signal lumineux prédéterminé enregistré dans une mémoire du dispositif d'authentification 200, alors le dispositif d'authentification 200 bascule dans le mode actif,
- le dispositif d'authentification 200 peut émettre un signal d'acquittement, par exemple un signal prédéterminé ; ce signal prédéterminé peut être un signal sonore si le dispositif d'authentification 200 comprend un haut-parleur ou bien un signal radio, par exemple, Bluetooth si le dispositif d'authentification 200 comprend un émetteur-récepteur radio,
- le dispositif électronique reçoit le signal d'acquittement,
- le dispositif électronique peut alors reprendre le procédé précédemment décrit à partir de l'étape 515 (« émission de l'identification »).

Ce mode de réalisation alternatif de l'invention permet aussi avantageusement de se passer de picots sous le dispositif d'authentification 200, ce qui simplifie le design et la production du dispositif d'authentification 200. De plus, l'écran du dispositif électronique 200 ne nécessite pas d'être un écran tactile, ce qui élargit la compatibilité du dispositif d'authentification 200.

Selon le mode de réalisation de l'invention, le dispositif d'authentification 200 peut comprendre une diode ou tout autre dispositif de restitution, tel un écran, permettant d'indiquer à un utilisateur du dispositif d'authentification 200 la bonne exécution du procédé ou au contraire un échec du procédé.

Selon le mode de réalisation de l'invention, une fois la connexion radio établie lors de l'étape (525, 575), le dispositif électronique 410 peut être adapté afin de transmettre des instructions prédéterminées de configuration et/ou de relevé d'informations au dispositif d'authentification 200.

## Revendications

1. Dispositif d'authentification (200) destiné à être utilisé avec un dispositif électronique (410) comprenant un écran tactile capacitif et un émetteur-récepteur radio, le dispositif d'authentificat comprenant :
- un récepteur lumineux (210), disposé sur une face du dispositif d'authentification destinée à être placée en face de l'écran,
- un émetteur-récepteur radio (230),
- une mémoire comprenant une clef de chiffrement (243, 260),
- une pluralité de picots (350, 351, 352, 360, 361, 362, 370, 371, 372) disposés sur la face du dispositif d'authentification destinée à être placée en face de l'écran, au moins deux picots étant constitués d'un matériau conducteur et constituant un motif prédéterminé associé à une première information d'activation, les autres picots étant constitués d'un matériau isolant, tous les picots étant d'un aspect identique,
- un premier mode de fonctionnement, dit mode veille, et un deuxième mode de fonctionnement, dit mode actif, le mode veille étant **caractérisé par** une consommation énergétique du dispositif d'authentification inférieure à celle du mode actif,
le dispositif d'authentification étant adapté pour :
- fonctionner (545) dans le premier mode de fonctionnement, dit mode veille,
- recevoir (555), via le récepteur lumineux, et décoder un signal lumineux dit d'activation émis par l'écran, le signal lumineux dit d'activation encodant un message comprenant une deuxième information d'activation,
- déterminer la validité de l'information d'activation reçue, et, si la deuxième information d'activation est égale à la première information d'activation,
- basculer (560) dans le deuxième mode de fonctionnement dit mode actif,
le dispositif d'authentification étant adapté pour, dans le deuxième mode de fonctionnement :
- recevoir (565), via le récepteur lumineux, et décoder un signal lumineux dit d'identification émis par l'écran, le signal lumineux dit d'identification encodant un message comprenant une information d'identification,
- diffuser (570) l'information d'identification via son émetteur-récepteur radio,
- recevoir (575), via son émetteur-récepteur radio, une demande d'établissement d'une connexion de la part du dispositif électronique, et,
- établir (575) la connexion avec le dispositif électronique,
- recevoir (580), via la connexion établie, un message comprenant une information à chiffrer,
- chiffrer (585) ladite information en utilisant la clef de chiffrement,
- émettre (590) un message vers le dispositif électronique, le message comprenant l'information chiffrée.

2. Dispositif d'authentification selon la revendication précédente, le signal lumineux dit d'identification encodant un message comprenant de plus une information d'authentification, le dispositif d'authentification étant adapté pour, ultérieurement à l'étape de réception de la demande d'établissement de la connexion :
- sécuriser (575) l'établissement de la connexion en utilisant l'information d'authentification.

3. Dispositif d'authentification selon l'une des revendications précédentes, le dispositif d'authentification comprenant :
- une jupe (320, 340) souple et opaque disposée autour du récepteur lumineux,
la jupe étant adaptée pour, quand le dispositif d'authentification est en contact avec l'écran du dispositif électronique, permettre uniquement la captation par le récepteur lumineux d'une lumière émise par l'écran.

4. Dispositif d'authentification selon la revendication 3, le dispositif d'authentification comprenant une pluralité de récepteurs lumineux disposés sur la face du dispositif d'authentification destinée à être placée en face de l'écran, chaque récepteur lumineux étant entouré d'une jupe souple et opaque.

5. Dispositif d'authentification selon la revendication précédente, une même jupe souple et opaque pouvant entourer une pluralité de récepteurs lumineux.

6. Dispositif d'authentification selon l'une des revendications précédentes, la mémoire étant un élément sécurisé (260).

7. Dispositif d'authentification selon l'une des revendications précédentes, les émetteurs-récepteurs radio étant conformes à une norme Bluetooth.

8. Système d'authentification, le système comprenant :
- un dispositif d'authentification (200) selon l'une des revendications précédentes,
- un dispositif électronique (410) comprenant un écran et un émetteur-récepteur radio,
le dispositif électronique exécutant une application d'authentification et étant adapté pour :
- émettre (510) le signal lumineux dit d'activation,
- émettre (515) le signal lumineux dit d'identification,
- détecter (520), via son émetteur-récepteur radio, la diffusion de l'information d'identification par le dispositif d'authentification,
- établir (525), via son émetteur-récepteur radio, une connexion avec le dispositif d'authentification,
- émettre (530) vers dispositif d'authentification, via la connexion, un message comprenant une information à chiffrer,
- recevoir (535), via la connexion, un message comprenant une information chiffrée.

9. Procédé d'authentification par un dispositif d'authentification destiné à être utilisé avec un dispositif électronique (410) comprenant un écran tactile capacitif et un émetteur-récepteur radio, le dispositif d'authentification comprenant :
- un récepteur lumineux (210), disposé sur une face du dispositif d'authentification destinée à être placée en face de l'écran,
- un émetteur-récepteur radio (230),
- une mémoire comprenant une clef de chiffrement (243, 260),
- une pluralité de picots (350, 351, 352, 360, 361, 362, 370, 371, 372) disposés sur la face du dispositif d'authentification destinée à être placée en face de l'écran, au moins deux picots étant constitués d'un matériau conducteur et constituant un motif prédéterminé associé à une première information d'activation, les autres picots étant constitués d'un matériau isolant, tous les picots étant d'un aspect identique,
- un premier mode de fonctionnement, dit mode veille, et un deuxième mode de fonctionnement, dit mode actif, le mode veille étant **caractérisé par** une consommation énergétique du dispositif d'authentification inférieure à celle du mode actif,
le procédé comportant les étapes suivantes:
- fonctionnement (545) dans le premier mode de fonctionnement, dit mode veille,
- détection, par le dispositif électronique (410) de la présence du dispositif d'authentification grâce aux picots conducteurs en déterminant le motif prédéterminé constitué par les au moins deux picots conducteurs,
- réception (555), via le récepteur lumineux, et décodage d'un signal lumineux dit d'activation émis par l'écran, le signal lumineux dit d'activation encodant un message comprenant une deuxième information d'activation,
- détermination de la validité de l'information d'activation reçue, et, si la deuxième information d'activation est égale à la première information d'activation,
- basculement (560) dans le deuxième mode de fonctionnement dit mode actif,
et dans le deuxième mode de fonctionnement :
- réception (565), via le récepteur lumineux, et décodage d'un signal lumineux dit d'identification émis par l'écran, le signal lumineux dit d'identification encodant un message comprenant une information d'identification,
- diffusion (570) de l'information d'identification via son émetteur-récepteur radio,
- réception (575), via son émetteur-récepteur radio, d'une demande d'établissement d'une connexion de la part du dispositif électronique, et,
- établissement (575) de la connexion avec le dispositif électronique,
- réception (580), via la connexion établie, d'un message comprenant une information à chiffrer,
- chiffrement (585) de ladite information en utilisant la clef de chiffrement,
- émission (590) d'un message vers le dispositif électronique, le message comprenant l'information chiffrée.

## Patentansprüche

1. Authentifizierungsvorrichtung (200), die dazu bestimmt ist, mit einer elektronischen Vorrichtung (410) verwendet zu werden, die einen kapazitiven Berührungsbildschirm und einen Funk-Sender/Empfänger enthält, wobei die Authentifizierungsvorrichtung enthält:
- einen Lichtempfänger (210), der auf einer Seite der Authentifizierungsvorrichtung angeordnet ist, die dazu bestimmt ist, dem Bildschirm gegenüber platziert zu werden,
- einen Funk-Sender/Empfänger (230),
- einen einen Verschlüsselungsschlüssel (243, 260) enthaltenden Speicher,
- eine Vielzahl von Noppen (350, 351, 352, 360, 361, 362, 370, 371, 372), die auf der Seite der Authentifizierungsvorrichtung angeordnet sind, die dazu bestimmt ist, gegenüber dem Bildschirm platziert zu werden, wobei mindestens zwei Noppen aus einem leitenden Material bestehen und ein vorbestimmtes Muster bilden, das einer ersten Aktivierungsinformation zugeordnet ist, wobei die anderen Noppen aus einem Isoliermaterial bestehen, wobei alle Noppen identisch aussehen,
- einen ersten Betriebsmodus, Standby-Modus genannt, und einen zweiten Betriebsmodus, aktiver Modus genannt, wobei der Standby-Modus durch einen niedrigeren Energieverbrauch der Authentifizierungsvorrichtung als derjenige des aktiven Modus gekennzeichnet ist,
wobei die Authentifizierungsvorrichtung geeignet ist, um:
- im ersten Betriebsmodus, Standby-Modus genannt, zu arbeiten (545),
- über den Lichtempfänger ein vom Bildschirm gesendetes so genanntes Aktivierungslichtsignal zu empfangen (555) und zu decodieren, wobei das so genannte Aktivierungslichtsignal eine Nachricht codiert, die eine zweite Aktivierungsinformation enthält,
- die Gültigkeit der empfangenen Aktivierungsinformation zu bestimmen, und wenn die zweite Aktivierungsinformation gleich der ersten Aktivierungsinformation ist,
- in den aktiver Modus genannten zweiten Betriebsmodus überzugehen (560),
wobei die Authentifizierungsvorrichtung geeignet ist, um im zweiten Betriebsmodus:
- über den Lichtempfänger ein vom Bildschirm gesendetes so genanntes Identifikationslichtsignal zu empfangen (565) und zu decodieren, wobei das so genannte Identifikationslichtsignal eine Nachricht codiert, die eine Identifikationsinformation enthält,
- die Identifikationsinformation über ihren Funk-Sender/Empfänger zu verbreiten (570),
- über ihren Funk-Sender/Empfänger eine Aufbauanforderung einer Verbindung von der elektronischen Vorrichtung zu empfangen (575), und
- die Verbindung mit der elektronischen Vorrichtung aufzubauen (575),
- über die aufgebaute Verbindung eine Nachricht zu empfangen (580), die eine zu verschlüsselnde Information enthält,
- die Information unter Verwendung des Verschlüsselungsschlüssels zu verschlüsseln (585),
- eine Nachricht an die elektronische Vorrichtung zu senden (590), wobei die Nachricht die verschlüsselte Information enthält.

2. Authentifizierungsvorrichtung nach dem vorhergehenden Anspruch, wobei das so genannte Identifikationslichtsignal eine Nachricht codiert, die außerdem eine Authentifizierungsinformation enthält, wobei die Authentifizierungsvorrichtung geeignet ist, um nach dem Schritt des Empfangs der Aufbauanforderung der Verbindung:
- den Aufbau der Verbindung unter Verwendung der Authentifizierungsinformation zu sichern (575).

3. Authentifizierungsvorrichtung nach einem der vorhergehenden Ansprüche, wobei die Authentifizierungsvorrichtung enthält:
- einen biegsamen und lichtundurchlässigen Mantel (320, 340), der um den Lichtempfänger herum angeordnet ist, wobei der Mantel geeignet ist, um, wenn die Authentifizierungsvorrichtung mit dem Bildschirm der elektronischen Vorrichtung in Kontakt ist, nur das Auffangen eines vom Bildschirm gesendeten Lichts durch den Lichtempfänger zu erlauben.

4. Authentifizierungsvorrichtung nach Anspruch 3, wobei die Authentifizierungsvorrichtung eine Vielzahl von Lichtempfängern enthält, die auf der Seite der Authentifizierungsvorrichtung angeordnet sind, die dazu bestimmt ist, gegenüber dem Bildschirm platziert zu werden, wobei jeder Lichtempfänger von einem biegsamen und lichtundurchlässigen Mantel umgeben ist.

5. Authentifizierungsvorrichtung nach dem vorhergehenden Anspruch, wobei ein gleicher biegsamer und lichtundurchlässiger Mantel eine Vielzahl von Lichtempfängern umgeben kann.

6. Authentifizierungsvorrichtung nach einem der vorhergehenden Ansprüche, wobei der Speicher ein gesichertes Element (260) ist.

7. Authentifizierungsvorrichtung nach einem der vorhergehenden Ansprüche, wobei die Funk-Sender/Empfänger einer Bluetooth-Norm entsprechen.

8. Authentifizierungssystem, wobei das System enthält:
- eine Authentifizierungsvorrichtung (200) nach einem der vorhergehenden Ansprüche,
- eine elektronische Vorrichtung (410), die einen Bildschirm und einen FunkSender/Empfänger enthält,
wobei die elektronische Vorrichtung eine Authentifizierungsanwendung ausführt und geeignet ist, um:
- das so genannte Aktivierungslichtsignal zu senden (510),
- das so genannte Identifikationslichtsignal zu senden (515),
- über ihren Funk-Sender/Empfänger die Verbreitung der Identifikationsinformation durch die Authentifizierungsvorrichtung zu erkennen (520),
- über ihren Funk-Sender/Empfänger eine Verbindung mit der Authentifizierungsvorrichtung aufzubauen (525),
- über die Verbindung eine eine zu verschlüsselnde Information enthaltende Nachricht an die Authentifizierungsvorrichtung zu senden (530),
- über die Verbindung eine eine verschlüsselte Information enthaltende Nachricht zu empfangen (535).

9. Verfahren zur Authentifizierung durch eine Authentifizierungsvorrichtung, die dazu bestimmt ist, mit einer elektronischen Vorrichtung (410) verwendet zu werden, die einen kapazitiven Berührungsbildschirm und einen Funk-Sender/Empfänger enthält, wobei die Authentifizierungsvorrichtung enthält:
- einen Lichtempfänger (210), der auf einer Seite der Authentifizierungsvorrichtung angeordnet ist, die dazu bestimmt ist, gegenüber dem Bildschirm platziert zu werden,
- einen Funk-Sender/Empfänger (230),
- einen einen Verschlüsselungsschlüssel (243, 260) enthaltenden Speicher,
- eine Vielzahl von Noppen (350, 351, 352, 360, 361, 362, 370, 371, 372), die auf der Seite der Authentifizierungsvorrichtung angeordnet sind, die dazu bestimmt ist, gegenüber dem Bildschirm platziert zu werden, wobei mindestens zwei Noppen aus einem leitenden Material bestehen und ein vorbestimmtes Muster bilden, das einer ersten Aktivierungsinformation zugeordnet ist, wobei die anderen Noppen aus einem Isoliermaterial bestehen, wobei alle Noppen gleich aussehen,
- einen Standby-Modus genannten ersten Betriebsmodus, und einen aktiver Modus genannten zweiten Betriebsmodus, wobei der Standby-Modus durch einen geringeren Energieverbrauch der Authentifizierungsvorrichtung als derjenige des aktiven Modus gekennzeichnet ist,
wobei das Verfahren die folgenden Schritte aufweist:
- Betrieb (545) im ersten Betriebsmodus, Standby-Modus genannt,
- Erkennung, durch die elektronische Vorrichtung (410), des Vorhandenseins der Authentifizierungsvorrichtung dank der leitenden Noppen, indem das von den mindestens zwei leitenden Noppen gebildete vorbestimmte Muster bestimmt wird,
- Empfang (555), über den Lichtempfänger, und Decodierung eines vom Bildschirm gesendeten so genannten Aktivierungslichtsignals, wobei das so genannte Aktivierungslichtsignal eine Nachricht codiert, die eine zweite Aktivierungsinformation enthält,
- Bestimmung der Gültigkeit der empfangenen Aktivierungsinformation, und wenn die zweite Aktivierungsinformation gleich der ersten Aktivierungsinformation ist,
- Übergang (560) in den aktiver Modus genannten zweiten Betriebsmodus, und im zweiten Betriebsmodus:
- Empfang (565), über den Lichtempfänger, und Decodierung eines vom Bildschirm gesendeten so genannten Identifikationslichtsignals, wobei das so genannte Identifikationslichtsignal eine Nachricht codiert, die eine Identifikationsinformation enthält,
- Verbreitung (570) der Identifikationsinformation über ihren FunkSender/Empfänger,
- Empfang (575), über ihren Funk-Sender/Empfänger, einer Aufbauanforderung einer Verbindung von der elektronischen Vorrichtung, und
- Aufbau (575) der Verbindung mit der elektronischen Vorrichtung,
- Empfang (580), über die aufgebaute Verbindung, einer eine zu verschlüsselnde Information enthaltenden Nachricht,
- Verschlüsselung (585) der Information unter Verwendung des Verschlüsselungsschlüssels,
- Senden (590) einer Nachricht an die elektronische Vorrichtung, wobei die Nachricht die verschlüsselte Information enthält.

## Claims

1. Authentication device (200) intended to be used with an electronic device (410) comprising a capacitive touchscreen and a radio transceiver, the authentication device comprising:
- a light receiver (210) disposed on a face of the authentication device, which face is intended to be placed facing the screen,
- a radio transceiver (230),
- a memory comprising an encryption key (243, 260),
- a plurality of contacts (350, 351, 352, 360, 361, 362, 370, 371, 372) disposed on that face of the authentication device that is intended to be placed facing the screen, at least two contacts being made of a conductive material and forming a predetermined pattern associated with a first item of activation information, the other contacts being made of an insulating material, all the contacts having an identical appearance,
- a first operating mode, called sleep mode, and a second operating mode, called active mode, the sleep mode being **characterized by** an energy consumption of the authentication device that is less than that of the active mode,
the authentication device being designed to:
- operate (545) in the first operating mode, called sleep mode,
- receive (555), via the light receiver, and decode a so-called activation light signal emitted by the screen, the so-called activation light signal encoding a message comprising a second item of activation information,
- determine the validity of the received activation information, and, if the second activation information is identical to the first activation information,
- shifting (560) into the second operating mode, called active mode,
the authentication device being designed to, in the second operating mode:
- receive (565), via the light receiver, and decode a so-called identification light signal emitted by the screen, the so-called identification light signal encoding a message comprising an item of identification information,
- transmit (570) the identification information via its radio transceiver,
- receive (575), via its radio transceiver, a request to establish a connection from the electronic device, and
- establish (575) the connection with the electronic device,
- receive (580), via the established connection, a message comprising an item of information to be encrypted,
- encrypt (585) said information by using the encryption key,
- sending (590) a message to the electronic device, the message comprising the encrypted information.

2. Authentication device according to the preceding claim, the so-called identification light signal encoding a message further comprising an item of authentication information, the authentication device being designed to, following the step of receiving the request to establish the connection:
- secure (575) the establishment of the connection by using the authentication information.

3. Authentication device according to either of the preceding claims, the authentication device comprising:
- a flexible and opaque skirt (320, 340) disposed around the light receiver,
the skirt being designed to, when the authentication device is in contact with the screen of the electronic device, allow only the light receiver to capture light emitted by the screen.

4. Authentication device according to Claim 3, the authentication device comprising a plurality of light receivers disposed on that face of the authentication device that is intended to be placed facing the screen, each light receiver being surrounded by a flexible and opaque skirt.

5. Authentication device according to the preceding claim, it being possible for one and the same flexible and opaque skirt to surround a plurality of light receivers.

6. Authentication device according to one of the preceding claims, the memory being a secured element (260).

7. Authentication device according to one of the preceding claims, the radio transceivers conforming to a Bluetooth standard.

8. Authentication system, the system comprising:
- an authentication device (200) according to one of the preceding claims,
- an electronic device (410) comprising a screen and a radio transceiver,
the electronic device executing an authentication application and being designed to:
- emit (510) the so-called activation light signal,
- emit (515) the so-called identification light signal,
- detect (520), via its radio transceiver, the transmission of the identification information by the authentication device,
- establish (525), via its radio transceiver, a connection with the authentication device,
- send (530) to the authentication device, via the connection, a message comprising an item of information to be encrypted,
- receive (535), via the connection, a message comprising an item of encrypted information.

9. Method for authentication by an authentication device intended to be used with an electronic device (410) comprising a capacitive touchscreen and a radio transceiver, the authentication device comprising:
- a light receiver (210) disposed on a face of the authentication device, which face is intended to be placed facing the screen,
- a radio transceiver (230),
- a memory comprising an encryption key (243, 260),
- a plurality of contacts (350, 351, 352, 360, 361, 362, 370, 371, 372) disposed on that face of the authentication device that is intended to be placed facing the screen, at least two contacts being made of a conductive material and forming a predetermined pattern associated with a first item of activation information, the other contacts being made of an insulating material, all the contacts having an identical appearance,
- a first operating mode, called sleep mode, and a second operating mode, called active mode, the sleep mode being **characterized by** an energy consumption of the authentication device that is less than that of the active mode,
the method comprising the following steps:
- operation (545) in the first operating mode, called sleep mode,
- detection, by the electronic device (410), of the presence of the authentication device by virtue of the conductive contacts by determining the predetermined pattern formed by the at least two conductive contacts,
- reception (555), via the light receiver, and decoding of a so-called activation light signal emitted by the screen, the so-called activation light signal encoding a message comprising a second item of activation information,
- determination of the validity of the received activation information, and, if the second activation information is identical to the first activation information,
- shifting (560) into the second operating mode, called active mode,
and in the second operating mode:
- reception (565), via the light receiver, and decoding of a so-called identification light signal emitted by the screen, the so-called identification light signal encoding a message comprising an item of identification information,
- transmission (570) of the identification information via its radio transceiver,
- reception (575), via its radio transceiver, of a request to establish a connection from the electronic device, and
- establishment (575) of the connection with the electronic device,
- reception (580), via the established connection, of a message comprising an item of information to be encrypted,
- encryption (585) of said information by using the encryption key,
- sending (590) of a message to the electronic device, the message comprising the encrypted information.
